## Europäisches Patentamt

## European Patent Office

## Office européen des brevets

(11) Veröffentlichungsnummer: **0 334 878**
**B1**

(12) **EUROPÄISCHE PATENTSCHRIFT**

(45) Veröffentlichungstag der Patentschrift: **16.01.91**

(51) Int. Cl.⁵: **B 60 S 1/36**, B 60 S 1/32

(21) Anmeldenummer: **88900018.8**

(22) Anmeldetag: **28.11.87**

(86) Internationale Anmeldenummer:
**PCT/EP87/00743**

(87) Internationale Veröffentlichungsnummer:
**WO 88/04247 16.06.88 Gazette 88/13**

(54) SCHEIBENWISCHERANLAGE FÜR EIN KRAFTFAHRZEUG.

(30) Priorität: **05.12.86 DE 3641551**

(43) Veröffentlichungstag der Anmeldung:
**04.10.89 Patentblatt 89/40**

(45) Bekanntmachung des Hinweises auf die
Patenterteilung:
**16.01.91 Patentblatt 91/03**

(84) Benannte Vertragsstaaten:
**DE FR GB IT**

(56) Entgegenhaltungen:
**DE-C-3 125 628**
**GB-A-1 190 426**
**GB-A-1 429 807**
**US-A-2 607 065**
**US-A-3 551 938**
**US-A-4 245 369**

(73) Patentinhaber: **AUDI AG**
**Auto-Union-Strasse 1 Postfach 220**
**D-8070 Ingolstadt (DE)**

(72) Erfinder: **Piech, Ferdinand**
**Gerolfinger Strasse 128**
**D-8070 Ingolstadt (DE)**

(74) Vertreter: **Engelhardt, Harald**
**Audi AG Postfach 2 20**
**D-8070 Ingolstadt (DE)**

Courier Press, Leamington Spa, England.

**Beschreibung**

Die Erfindung betrifft eine Scheibenwischeranlage für ein Kraftfahrzeug nach dem Oberbegriff des Anspruchs 1 (Scheibenwischeranlage, die aus der GB—A—1,190,426 bekannt ist).

Herkömmliche Scheibenwischeranlagen bestehen aus dem Scheibenwischerantrieb, einem Drehlager am Kraftfahrzeug, einem oder mehreren Wischerarmen mit je einem daran befestigten Wischerblatthalter mit Wischerblatt. Die Winkelstellung zwischen dem Wischerblatt und dem Wischerarm bleibt während der Wischbewegung unverändert gleich. Als wirksames Wischfeld wird somit ein Kreisausschnitt überstrichen.

Da die zu wischenden Scheiben üblicherweise etwa rechtwinkliges Format haben, wird diese Fläche vom Wischerfeld nur unvollkommen überdeckt und insbesondere in den oberen Seitenbereichen der Scheibe ergeben sich ungewischte Flächen.

Für eine Vergrößerung des Wischfeldes und eine Anpassung an eine rechteckige Scheibenform ist bereits eine Scheibenwischeranlage mit zwei Wischerarmen bekannt (GB—A—1 190 426), die je in Abhängigkeit der Drehwinkel der Wischerarme durch je eine Längenveränderungseinrichtung so verstellt werden, daß die Lagerpunkte am Wischblatthalter waagerecht über die Scheibe bewegt werden, so daß sich ein etwa rechteckiges, vom Wischerblatt in etwa senkrechter Stellung überstrichenes Wischfeld ergibt, wobei die Wischerarme je um einen von zwei im Abstand liegenden Lagerpunkten schwenkbar am Fahrzeug angeordnet und entsprechend je mit einem vom Fahrzeug entfernten Ende an einem von zwei ebenfalls im Abstand liegenden Lagerpunkten drehbar mit dem Wischerblatthalter verbunden sind.

Die Längenveränderungseinrichtung ist hier mit Hilfe einer aufwendigen Anordnung aus Zahnrädern und Kurbelstangen aufgebaut.

Aufgabe der Erfindung ist es, eine gattungsgemäße Scheibenwischeranlage mit Hilfe einer einfach aufgebauten Längenveränderungseinrichtung weiterzubilden.

Diese Aufgabe wird mit den kennzeichnenden Merkmalen des Anspruchs 1 gelöst.

Gemäß Anspruch 1 umfaßt die Längenveränderungseinrichtung eines jeden Wischerarmes eine Doppelzylinderanordnung, wobei der Zylinder der ersten Zylinderkolbenanordnung am vom Wischerblatthalter entfernten Ende des entsprechenden Wischerarmes fest angeordnet ist und der Zylinder der zweiten Zylinderkolbenanordnung verschiebbar in einer Kulisse geführt ist. Ein um je einen der Lagerpunkte am Fahrzeug schwenkbares Rohr ist mit beidseitigen Kolben versehen, die je im Zylinder der ersten bzw. zweiten Zylinderkolbenanordnung geführt sind und mit diesem eine erste bzw. zweite mit Hydraulikflüssigkeit gefüllte Kammer bilden, so daß beide Kammern durch das einen Überstromkanal bildende Rohr miteinander verbunden sind und bei einem Verschwenken des Rohrs der Zylinderinhalt der zweiten Zylinderkolbenanordnung verändert und entsprechend der Zylinderinhalt der ersten Zylinderkolbenanordnung mit einer Längsverstellung des entsprechenden Wischerarmes verändert wird.

Eine so gebildete Längenveränderungseinrichtung ist einfach im Aufbau und sicher in der Funktion.

In einer ersten Ausführungsform der Erfindung liegen gemäß Anspruch 2 die Lagerpunkt für die beiden Wischerarme pro Wischerblatt am Fahrzeug übereinander. Dadurch ergibt sich eine entsprechend günstige übereinanderliegende Anordnung der Lagerpunkte am Wischerblatthalter. Je nach Gegebenheiten an einem konkreten Fahrzeug können sich jedoch Platzprobleme bei der fahrzeugseitigen Lagerung ergeben. Da sich die beiden Wischerarme während des Wischvorgangs überholen, müssen diese in unterschiedlichen Höhenebenen angeordnet sein, wodurch sich auch hier Platzprobleme ergeben können.

In einer weiteren Ausführung gemäß Anspruch 3 wird zur Lösung dieser eventuellen Probleme vorgeschlagen, die fahrzeugseitigen Lagerpunkte nebeneinander anzuordnen. Dadurch ist es erforderlich, den senkrechten Wischerblatthalter an einem waagrechten Steg anzubringen, wobei an diesem nunmehr die oberen Lagerpunkte für die Parallelogrammführung anzuordnen sind. Dadurch kann möglicherweise der Antrieb platzsparender angebracht werden. Die beiden Wischerarme überholen sich nicht mehr, so daß sie in der gleichen Ebene liegen können.

Zum Erreichen großer Stellwege am Wischerarm bei kleinen Führungswegen an der zweiten Zylinderkolbenanordnung ist es nach Anspruch 4 vorteilhaft, unterschiedliche wirksame Kolbenflächen vorzusehen.

Anhand einer Zeichnung werden zwei Ausführungsbeispiele der Erfindung mit weiteren Einzelheiten, Merkmalen und Vorteilen näher erläutert. Es zeigen

Fig. 1 eine Prinzipdarstellung einer Scheibenwischeranlage mit einer Parallelführung einer ersten Ausführungsform,

Fig. 2 eine Prinzipdarstellung einer Scheibenwischeranlage mit Parallelführung einer zweiten Ausführungsform,

Fig. 3 eine Prinzipdarstellung einer weiteren Ausführungsform für eine Einrichtung zur Längenveränderung eines Wischerarms.

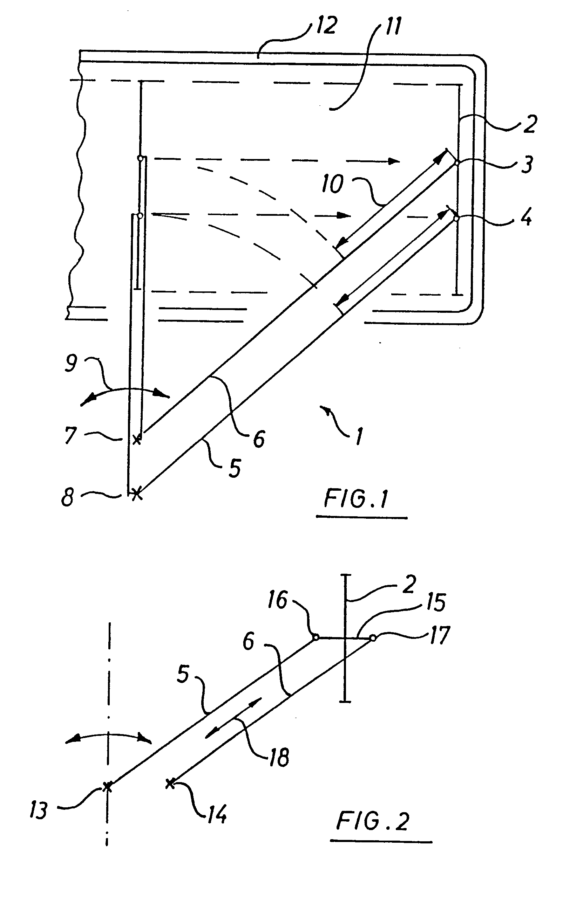

In Fig. 1 ist eine Scheibenwischeranlage 1 dargestellt, mit einem Wischerblatthalter 2, an dem über zwei Lagerpunkte 3, 4 zwei Wischerarme 5, 6 angebracht sind, die am Fahrzeug an weiteren zwei Lagerpunkten 7, 8 befestigt sind. Die Lagerpunkte 3, 4 sowie 7, 8 liegen im gleichen Abstand untereinander, so daß die Wischerarme 5, 6 eine Parallelführung für den Wischerblatthalter 2 bilden und diesen bei der Schwenkbewegung der Wischerarme 5, 6 in seiner senkrechten Richtung halten.

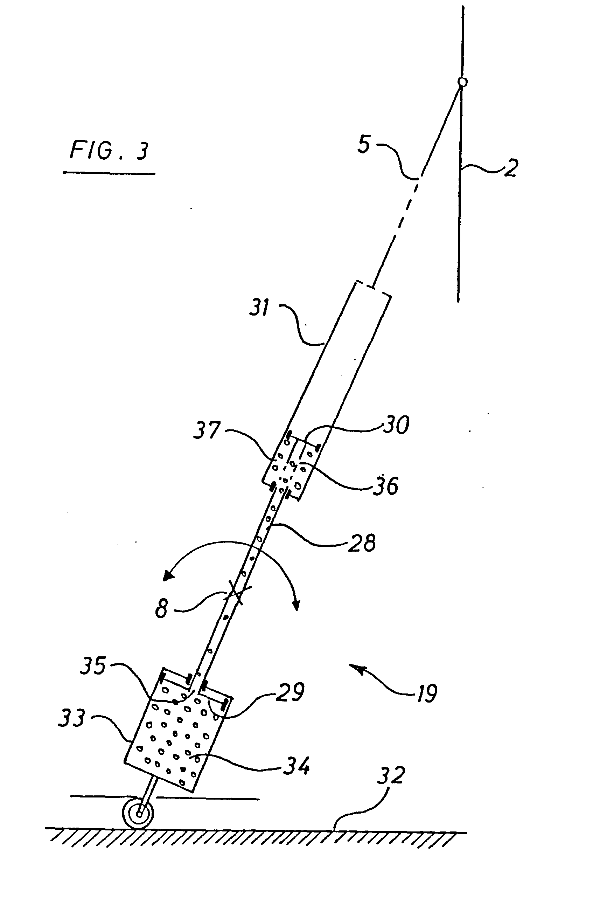

Zugleich mit der Schwenkbewegung (dargestellt durch den Doppelpfeil 9) werden die Wischerarme 5, 6 durch eine in der Fig. 3 erläu-

2

terte Vorrichtung in ihrer Länge um einen maximalen Betrag (dargestellt durch den Pfeil 10) verlängert. Die Verlängerung wird entsprechend einem bestimmten Schwenkwinkel so durchgeführt, daß sich das in Fig. 1 strichliert angedeutete rechtwinklige Wischfeld 11 entsprechend einer etwa rechtwinkligen durch einen Fensterrahmen 12 begrenzten Fensterscheibe ergibt.

In Fig. 2 ist eine weitere ähnliche Ausführungsform dargestellt, bei der jedoch die Wischerarme 5, 6 an nebeneinander am Fahrzeug liegenden Lagerpunkten 13, 14 angelenkt sind. Um eine Parallelführung für den Wischerblatthalter 2 zu erreichen, ist ein etwa waagrechter Steg 15 mit waagrecht liegenden Lagerpunkten 16, 17 vorgesehen, an dem der Wischerblatthalter 2 in seiner senkrechten Lage befestigt ist. Auch hier werden in Verbindung mit der Schwenkbewegung der Wischerarme 5, 6 diese in ihrer Lage verstellt (dargestellt durch den Doppelpfeil 18).

In Fig. 3 ist eine weitere Vorrichtung 19 zur Längenveränderung eines Wischerarms 5 mit Wischerblatt 2 dargestellt. Diese besteht aus einem um den Lagerpunkt 8 schwenkbaren Rohr 28 mit beidseitigen Kolben 29, 30. Der Kolben 30 ist in einem mit dem Wischerarm 5 verbundenen Zylinder 31 und der Kolben 29 in einem an einer geraden Führung 32 abgestützten Zylinder 33 beweglich. Der Zylinder 33 ist mit Hydraulikflüssigkeit 34 gefüllt, die sich durch eine stirnseitige Öffnung 35 durch das Rohr 28 und über Bohrungen 36 in einen Zylinderraum 37 des Zylinders 31 erstreckt. Die Kolbenfläche des Kolbens 29 ist größer als die des Kolbens 30.

In Fig. 3 ist der Wischerarm 5 in einer nach rechts geneigten Position dargestellt. Zur Erläuterung der Funktion soll gedanklich eine Schwenkbewegung zurück zur Mitte hin durchgeführt werden. Wegen der Geradführung 32 wird dadurch der Zylinder 33 nach oben bewegt und damit dessen Zylindervolumen gegenüber dem Kolben 29, der über den Lagerpunkt 8 abgestützt ist, verkleinert. Damit strömt Hydraulikflüssigkeit 34 durch das Rohr 28 und die Bohrungen 36 in den Zylinderraum 37 hinter dem Kolben 30, wodurch der Zylinder 31 in Richtung auf den Lagerpunkt 8 bewegt und die wirksame Länge des Wischerarms 5 dadurch verkürzt wird.

## Patentansprüche

1. Scheibenwischeranlage für ein Kraftfahrzeug,
mit zwei Wischerarmen (5, 6) die je in Abhängigkeit der Drehwinkel der Wischerarme durch je eine Längenveränderungseinrichtung (19) so verstellt werden, daß die Lagerpunkte (3, 4; 16, 17) am Wischblatthalter (2) waagerecht über die Scheibe bewegt werden, so daß sich ein etwa rechteckiges, vom Wischerblatt in etwa senkrechter Stellung überstrichenes Wischfeld ergibt,
wobei die Wischerarme (5, 6) je um einen von zwei im Abstand liegenden Lagerpunkten (7, 8; 13, 14) schwenkbar am Fahrzeug angeordnet und entsprechend je mit einem vom Fahrzeug entfernten Ende an einem von zwei ebenfalls im Abstand liegenden Lagerpunkten (3, 4; 16, 17) drehbar mit dem Wischerblatthalter (2) verbunden sind, dadurch gekennzeichnet,
daß die Längenveränderungseinrichtung (19) eines jeden Wischerarmes (5, 6) eine Doppelzylinderanordnung umfaßt, wobei
der Zylinder (31) der ersten Zyliderkolbenanordnung (30, 31) am vom Wischerblatthalter (2) entfernten Ende des entsprechenden Wischerarmes (5, 6) fest angeordnet ist und der Zylinder (33) der zweiten Zylinderkolbenanordnung (29, 33) verschiebbar in einer Kulisse (32) geführt ist, und
ein um je einen der Lagerpunkte (7, 8; 13, 14) am Fahrzeug schwenkbares Rohr (28) mit beidseitigen Kolben (29, 30) versehen ist, die je im Zylinder (31, 33) der ersten bzw. zweiten Zylinderkolbenanordnung (30, 31; 29, 33) geführt sind und mit diesem eine erste bzw. zweite mit Hydraulikflüssigkeit gefüllte Kammer bilden, so daß
beide Kammern durch das einen Überströmkanal bildende Rohr (28) miteinander verbunden sind und bei einem Verschwenken des Rohrs (28) der Zylinderinhalt der zweiten Zylinderkolbenanordnung (29, 33) verändert und entsprechend der Zylinderinhalt der ersten Zylinderkolbenanordnung (30, 31) mit einer Längsverstellung des entsprechenden Wischerarmes (5, 6) verändert wird.

2. Scheibenwischeranlage nach Anspruch 1, dadurch gekennzeichnet, daß die Lagerpunkte (7, 8; 3, 4) am Fahrzeug und am Wischerblatthalter (2) in einer Senkrechten übereinander liegen.

3. Scheibenwischeranlage nach Anspruch 1, dadurch gekennzeichnet, daß die Lagerpunkte (13, 14) am Fahrzeug nebeneinander liegen und der Wischerblatthalter (2) mit einem waagrechten Steg (15) fest verbunden ist, wobei die weiteren beiden Lagerpunkte (16, 17) am Steg (15) liegen.

4. Scheibenwischeranlage nach einem der Ansprüche 1 bis 3, dadurch gekennzeichnet, daß die wirksame Kolbenfläche des zweiten Kolbens (29) größer als die des ersten Kolbens (30) ist.

## Revendications

1. Installation d'essuie-glace pour un véhicule automobile, comportant deux bras d'essuie-glace (5, 6), qui sont chacun réglés, en fonction de l'angle de rotation du balais, par un dispositif respectif (19) de modification de longueur, de telle sorte que les points d'articulation (3, 4; 16, 17) sur le porte-balai (2) soient déplacés horizontalement sur la glace, afin d'obtenir qu'une zone d'essuyage à peu près rectangulaire soit balayée par le balai d'essuie-glace dans une position sensiblement verticale, les bras (5, 6) étant montés oscillants sur le véhicule chacun autour de l'un de deux points d'articulation (7, 8; 13, 14) espacés et étant reliés de manière correspondante, par une extrémité éloignée du véhicule, de façon tournante au porte-balai (2) chacun en l'un de deux points d'articulation (3, 4; 16, 17) également espacés, caractérisée en ce que le dispositif (19) de modification de longueur de chaque bras d'essuie-glace (5, 6) comporte un mécanisme à deux cylindres, le cylindre (31) du premier ensemble cylindre-piston (30, 31) étant fixé à une extrémité du bras correspondant (5, 6) qui est éloigné du porte-balai (2), tandis que le cylindre (33) du second ensemble cylindre-piston (29, 33) est guidé en translation dans une coulisse (32), et il est prévu un tube (28), qui peut osciller autour d'un des points d'articulation (7, 8, 13, 14) sur le véhicule et qui est pourvu de pistons (29, 30) à ses deux extrémités, pistons qui sont chacun guidés dans un cylindre respectif (31, 33) du premier ou du second ensemble cylindre-piston (30, 31; 29, 33) et qui forment avec le cylindre correspondant une première ou une seconde chambre remplie de fluide hydraulique, de telle sorte que les deux chambres soient reliées entre elles par le tube (28) formant un canal de trop-plein et que, lors d'un pivotement du tube (28), le contenu du cylindre du second ensemble cylindre-piston (29, 33) soit modifié en qu'en correspondance le contenu du cylindre du premier ensemble cylindre-piston (30, 31) soit modifié en produisant une modification de longueur du bras correspondant (5, 6).

2. Installation d'essuie-glace selon la revendication 1, caractérisée en ce que les points d'articulation (7, 8; 3, 4) prévus sur le véhicule et sur le porte-balai (2) sont situés verticalement l'un au-dessus de l'autre.

3. Installation d'essuie-glace selon la revendication 1, caractérisée en ce que les points d'articulation (13, 14) prévus sur le véhicule sont situés l'un à côté de l'autre et le porte-balai (2) est relié rigidement à une tige horizontale (15), les deux autres points d'articulation (16, 17) étant situés sur la tige (15).

4. Installation d'essuie-glace selon l'une quelconque des revendications 1 à 3, caractérisée en ce que la surface active du second piston (29) est plus grande que celle du premier piston (30).

**Claims**

1. Window wiper apparatus for a motor vehicle,
with two wiper arms (5, 6) which are so adjusted each in dependence on the rotational angle of the wiper arms by a respective length-varying device (19) that the bearing points (3, 4; 16, 17) at the wiper blade holder (2) are moved horizontally over the window, thus effecting the wiping of a substantially rectangular area over which the wiper blade travels in a substantially vertical position,
the wiper arms (5, 6) being arranged on the vehicle such as to be pivotably movable each about one of two spaced-apart bearing points (7, 8; 13, 14), and correspondingly connected each at an end remote from the vehicle at one of two likewise spaced-apart bearing points (3, 4; 16, 17) in pivotably movable manner to the wiper blade holder (2), characterised in that
the length-varying device (19) of each wiper arm (5, 6) comprises a double cylinder arrangement, wherein
the cylinder (31) of the first cylinder-and-piston arrangement (30, 31) is securely arranged on that end of the corresponding wiper arm (5, 6) which is remote from the wiper blade holder (2), and the cylinder (33) of the second cylinder-and-piston arrangement (29, 33) is guided displaceably in a guideway (32), and
a tube (28) pivotably movable about in each case one of the bearing points (7, 8; 13, 14) on the vehicle is provided with pistons (29, 30) at its two ends, these being guided respectively in the cylinders (31, 33) of the first and second cylinder-and-piston arrangements (30, 31; 29, 33) and constituting with the respective cylinder first and second chambers filled with hydraulic fluid, so that
the two chambers are connected to one another by the tube (28), which forms an overflow duct, and, when the tube (28) moves pivotably, the cylinder volume of the second cylinder-and-piston arrangement (29, 33) is varied, and correspondingly the cylinder volume of the first cylinder-and-piston arrangement (30, 31) is varied, with adjustment of the length of the corresponding wiper arm (5, 6).

2. Window wiper apparatus according to claim 1, characterised in that the bearing points (7, 8; 3, 4) on the vehicle and on the wiper blade holder (2) are situated one above the other on a vertical line.

3. Window wiper apparatus according to claim 1, characterised in that the bearing points (13, 14) on the vehicle are situated side by side, and the wiper blade holder (2) is connected securely to a horizontal bridge element (15), the further two bearing points (16, 17) in this case being situated on the bridge element (15).

4. Window wiper apparatus according to one of claims 1 to 3, characterised in that the effective piston face area of the second piston (29) is greater than that of the first piston (30).

EP 0 334 878 B1

FIG.1

FIG.2

FIG. 3